# EUROPÄISCHE PATENTSCHRIFT

(11) **EP 1 234 698 B1**
(45) Veröffentlichungstag und Bekanntmachung des Hinweises auf die Patenterteilung: **21.03.2007**
(21) Anmeldenummer: 02003516.8
(22) Anmeldetag: 15.02.2002
(51) Int. Cl.: B60H 3/00

(54) **Schaltungsanordnung zum Bewerten eines von einem Luftgütesensorelement bereitgestellten Signals**
Circuit arrangement for evaluating a signal provided by an air quality sensor
Circuit pour évaluer un signal fourni par un détecteur de la qualité de l'air

(30) Priorität: 23.02.2001 DE 10108722
(43) Veröffentlichungstag der Anmeldung: 28.08.2002
(73) Patentinhaber: paragon AG, 33129 Delbrück (DE)
(72) Erfinder: Steinert, Alexander, 72076 Tuebingen (DE)
(74) Vertreter: Lelgemann, Karl-Heinz

(56) Entgegenhaltungen:
- DE-A- 3 304 324
- DE-A- 4 217 393
- DE-A- 19 634 566
- US-A- 4 478 049

## Beschreibung

### Stand der Technik

Aus der DE-A 34 46 082 ist ein Verfahren zur Schadstoffverminderung in einem Kraftfahrzeug-Innenraum bekannt geworden, bei dem ein mit Außenluft beaufschlagter Sensor den Kraftfahrzeug-Ventilatorselbsttätig entsprechend den auftretenden Schadstoffbelastungen aus- bzw. einschaltet. Bei einer lang anhaltenden Schadstoffbelastung, die dazu führen würde, dass die Belüftung des Kraftfahrzeug-Innenraums nicht mehr gewährleistet ist, wird das Schaltsignal nach Ablauf einer vorgegebenen Zeit von beispielsweise 5 Minuten intervallartig unterdrückt. Nach Ablauf der ebenfalls vorgegebenen Zeit, während der das Schaltsignal unterdrückt ist, wird das Schaltsignal wieder frei gegeben und ein neuer Zyklus beginnt. In einem Betriebszustand, in welchem die Schadstoffbelastung häufiger wechselt als die vorgegebene Zeit nach der das Schaltsignal unterdrückt wird, kann das Schaltsignal entsprechend häufig den Kraftfahrzeug-Ventilator aus- bzw. einschalten. Eine Geräuschbelästigung der Fahrzeugpassagiere ist nicht auszuschließen.

Aus der gattungsgemäßen DE 42 17 393 ist eine Schaltungsanordnung zum Bewerten eines von einem Luftgütesensorelements bereitgestellten Sensorsignals bekannt, wobei eine Schalthysterese zum Öffnen der Frischluftzufuhr vorgesehen ist, um ein stabiles Schaltsignal zu erhalten. Eine derartige Schaltungsanordnung lässt aber noch Wünsche offen.

### Vorteile der Erfindung

Die erfindungsgemäße Schaltungsanordnung weist zunächst den Vorteil auf, dass ein situationsangepaßtes Verhalten der Klimaanlage, -beispielsweise ein Öffnen und Schließen einer Umluftklappe oder das Betreiben eines Luftfilters, möglich wird. Ein wesentlicher Vorteil ist eine Reduzierung der Geräuschbelästigung der Kraftfahrzeug-Passagiere durch eine Reduzierung der Aktivitäten beispielsweise einer Umluftklappe der Klimaanlage. Ein weiterer wesentlicher Vorteil ist die Verbesserung der Luftqualität im Innenraum.

Eine Reduzierung der Häufigkeit des Auftretens wenigstens eines an die Klimaanlage weitergeleiteten externen Schaltsignals reduziert weiterhin die Beanspruchung eines für die Betätigung der Umluftklappe eingesetzten Verstellantriebs und reduziert den Verschleiß des Luftfilters. Auch hieraus resultiert eine Verbesserung des Klimas im Innenraum.

Erfindungsgemäß ist eine Schaltungsanordnung mit einer Signalbewertung vorgesehen, die das von wenigsten einem Luftgütesensorelement bereit gestellte Sensorsignal anhand von wenigstens einem Kriterium bewertet. Die Signalbewertung erzeugt wenigstens ein Schaltsignal, das einen ersten Signalzustand aufweist, der beispielsweise einer hohen Luftgüte entspricht, und das einen zweiten Signalzustand aufweist, der einer niedrigen Luftgüte entspricht. Vorgesehen ist ein Integrator, der bei Vorliegen des einen Zustands des Schaltsignals einen Kennwert erhöht und der bei Vorliegen des anderen Signalzustands den Kennwert absenkt. Vorhanden ist ein Vergleicher, der die Kenngröße mit einem vorgegebenen Schwellenwert vergleicht und der in Abhängigkeit vom Vergleichsergebnis ein Korrektursignal abgibt, welches das Schaltsignal beeinflußt.

Die erfindungsgemäße Schaltungsanordnung berücksichtigt demnach das Auftreten oder das Nichtauftreten wenigstens eines Schaltsignals über einen längeren Zeitraum. Das Korrektursignal führt im Ergebnis zu einer auf die Zeit bezogene gleichmäßigere Erzeugung des wenigstens einen externen Schaltsignals, das an die Klimaanlage weitergegeben wird.

Vorteilhafte Weiterbildungen und Ausgestaltungen der erfindungsgemäßen Schaltungsanordnung ergeben sich aus abhängigen Ansprüchen.

Eine erste vorteilhafte Maßnahme sieht vor, dass die Integration zeitdiskret durchgeführt wird, so dass eine einfache Realisierung in einer digitalen Schaltungsanordnung, insbesondere eine Realisierung als Software in einem Mikrocomputer möglich ist.

Eine andere vorteilhafte Weiterbildung sieht vor, dass mehrere Schaltsignale von der Signalbewertung bereit gestellt werden, die bei der Integration mit einem unterschiedlichen Gewichtungsfaktor berücksichtigt werden. Die unterschiedlichen Schaltsignale werden in der Signalbewertung anhand von unterschiedlichen Kriterien ermittelt. Beispielsweise kann ein erstes Schaltsignal anhand eines Vergleichs des vom Luftgütesensorelements bereit gestellten Sensorsignals mit einem vorgegebenen Schwellenwert bereit gestellt werden, während ein anderes Schaltsignal beispielsweise durch die Auswertung der zeitlichen Änderung des vom Luftgütesensorelements bereit gestellten Sensorsignals abgeleitet wird. Die unterschiedliche Gewichtung bei der Integration trägt der Bedeutung der einzelnen Kriterien und die darauf beruhende Bereitstellung der externen Schaltsignale Rechnung.

Eine vorteilhafte Ausgestaltung sieht die Vorgabe eines Startwerts für den im Integrator ermittelten Kennwert vor. Mit dieser Maßnahme kann ein vorteilhaftes Arbeiten der erfindungsgemäßen Schaltungsanordnung in einem Zeitbereich sichergestellt werden, der kurz nach der Inbetriebnahme liegt, in dem der im Integrator enthaltene Kennwert noch nicht stabil ist. Eine vorteilhafte Maßnahme sieht die Vorgabe einer oberen/unteren Grenze für den Kennwert vor, die dafür sorgt, dass im Ergebnis ein unzulässig langes Auftreten oder ein zu langes Nichtauftreten des Korrektursignals unterbleibt.

Eine besonders vorteilhafte Weiterbildung sieht vor, dass der Integrationsvorgang begrenzt ist auf ein maximales Zeitfenster. Das Zeitfenster kann beispielsweise auf einen Wert von 30 Minuten festgelegt werden. Der wesentliche Vorteil dieser Weiterbildung liegt darin, dass längere Zeit zurückliegende Signalanteile des vom Luftgütesensorelement bereitgestellten Sensorsignals bei der Ermittlung des Korrektursignals nicht mehr berücksichtigt werden.

Eine einfache Realisierungsmöglichkeit der erfindungsgemäßen Schaltungsanordnung sieht vor, dass der Integrator ein Zähler ist. Eine Zählersteuerung setzt das wenigstens eine Schaltsignal, das die Signalbewertung abgibt, in einen Vorwärts- bzw. ein Rückwärtszählsignal um. Die Gewichtung der unterschiedlichen Schaltsignale kann berücksichtigt werden durch eine Vorgabe einer bestimmten Anzahl der Zählvorgänge pro Zeiteinheit.

Eine besonders vorteilhafte Realisierungsmöglichkeit der erfindungsgemäßen Schaltungsanordnung sieht vor, dass der Integrator ein Speicher ist in Verbindung mit einem Addierer zum Summieren des Speicherinhalts. Diese Realisierungsmöglichkeit ist besonders geeignet zur Implementierung in einem Mikrocomputer. Die Gewichtung der unterschiedlichen Schalt-signale kann in besonders einfacher Weise berücksichtigt werden durch die Vorgabe des Betrags der abgespeicherten Werte.

Eine Ausgestaltung der erfindungsgemäßen Schaltungsanordnung sieht vor, dass das Korrektursignal das wenigstens eine externe Schaltsignal entweder unterdrückt oder zur Weiterleitung freigibt. Eine besonders vorteilhafte Ausgestaltung sieht vor, dass das Korrektursignal das wenigstens eine vorgegebene Kriterium beeinflußt, anhand dem die Signalbewertung das Sensorsignal bewertet.

Vorteilhafte weitere Ausgestaltungen und Weiterbildungen der erfindungsgemäßen Schaltungsanordnung ergeben sich aus der folgenden Beschreibung.

### Zeichnung

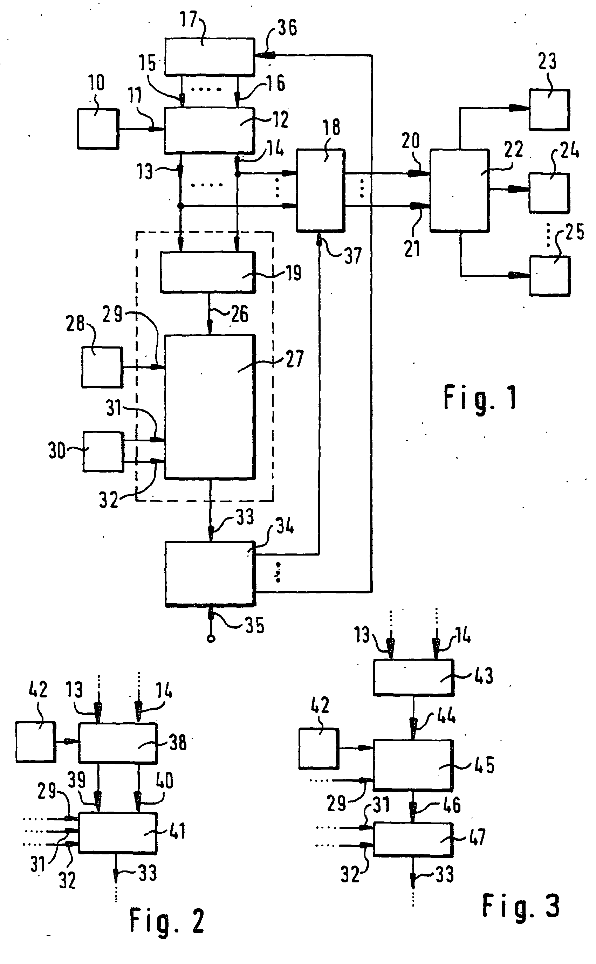

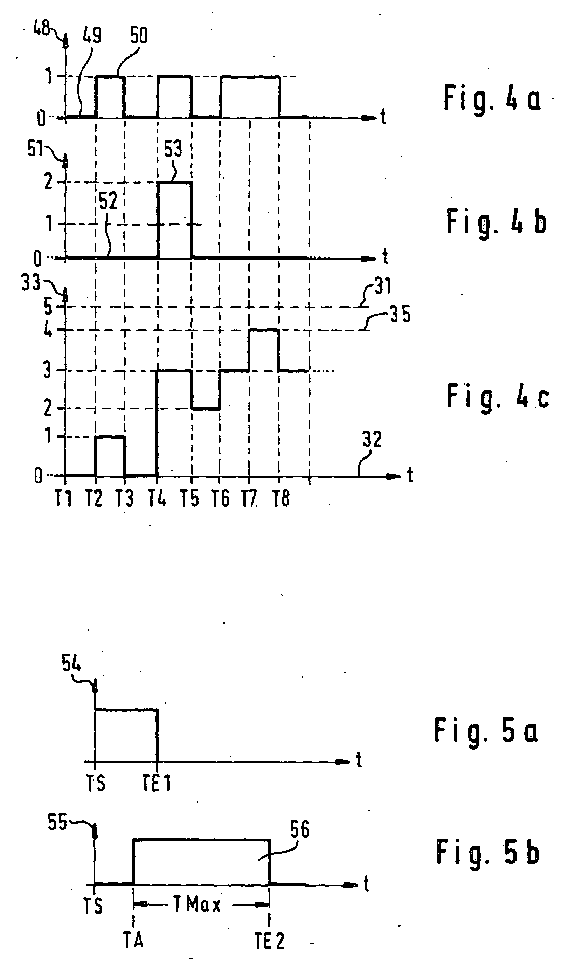

Figur 1 zeigt ein Blockschaltbild einer erfindungsgemäßen Schaltungsanordnung zum Bewerten eines von wenigstens einem Luftgütesensorelement bereitgestellten Sensorsignals, Figur 2 zeigt eine erste Realisierungsmöglichkeit des in Figur 1 gezeigten Blockschaltbildes , Figur 3 zeigt eine alternative Realisierungsmöglichkeit eines Teils des in Figur 1 gezeigten Blockschaltbildes, Figuren 4a - 4c zeigen drei Signalverläufe in Abhängigkeit von der Zeit und Figuren 5a - 5b zeigen zwei Zeitabschnitte.

Figur 1 zeigt ein Sensorelement 10, das ein Sensorsignal 11 an eine Signalbewertung 12 abgibt. Die Signalbewertung 12 gibt ein erstes und ein zweites Schaltsignal 13, 14 ab, das anhand eines ersten und zweiten Kriteriums 15, 16 ermittelt wird. Die Kriterien 15, 16 stellt eine Kriterienvorgabe 17 bereit. Die in Figur 1 eingetragenen Punkte sowohl zwischen dem ersten und zweiten Schaltsignal 13, 14 als auch zwischen dem ersten und zweiten Kriterium 15, 16 soll andeuten, dass weitere Schaltsignale bzw. weitere Kriterien vorgesehen sein können.

Das erste und zweite Schaltsignal 13, 14 gelangt sowohl an eine Schaltsignalweitergabe 18 als auch an eine Gewichtung 19. Die Schaltsignalweitergabe 18 legt ein erstes externes Schaltsignal 20 und ein zweites externes Schaltsignal 21 fest. Die in Figur 1 eingetragenen Punkte zwischen den externen Schaltsignalen 20, 21 deuten an, dass weitere externe Schaltsignale vorhanden sein können. Die externen Schaltsignale 20, 21 gelangen in eine Klimaanlage 22, die eine Umluftklappe 23, einen Ventilator 24 und eine Luftreinigung 25 steuert. Die zwischen dem Ventilator 24 und der Luftreinigung 25 eingetragenen Punkte deuten an, dass die Klimaanlage 22 weitere Komponenten steuern kann.

Die Gewichtung 19 gibt ein Eingangssignal 26 an einen Integrator 27 ab, dem weiterhin ein von einer Startwertvorgabe 28 bereitgestellter Startwert 29 sowie ein von einer Grenzwertvorgabe 30 bereitgestellter oberer Grenzwert 31 und unterer Grenzwert 32 zugeführt wird.

Der Integrator 27 gibt eine ermittelte Kenngröße 33 an einen Vergleicher 34 weiter, der die Kenngröße 33 mit einem Schwellenwert 35 vergleicht und in Abhängigkeit vom Vergleichsergebnis ein erstes und zweites Korrektursignal 36, 37 bereitstellt. Die zwischen den Korrektursignalen 36, 37 eingetragenen Punkte deuten an, dass der Vergleicher 34 weitere Korrektursignale bereitstellen kann. Das erste Korrektursignal 36 gelangt in die Kriterienvorgabe 17 und das zweite Korrektursignal 37 wird der Schaltsignalweitergabe 18 zugeleitet.

Figur 2 zeigt eine erste Realisierungsmöglichkeit der in Figur 1 gezeigten Gewichtung 19 und des Integrators 27. Im ersten Realisierungsbeispiel entspricht dem Vergleicher 19 eine Zählersteuerung 38, die ein Vorwärtszählsignal 39 und ein Rückwärtszählsignal 40 an einen dem Integrator 27 entsprechenden Zähler 41 abgibt. Zum Betreiben der Zählersteuerung ist ein Taktgenerator 42 vorgesehen.

Figur 3 zeigt eine weitere Realisierungsmöglichkeit des in Figur 1 gezeigten Vergleichers 19 und des Integrators 27. Das erste und zweite Schaltsignal 13, 14 wird einer Speicherwertfestlegung 43 zugeführt, die einen Speicherwert 44 ermittelt, der an einen Speicher 45 abgegeben wird. Aus dem Speicher 45 gelangt ein Datensignal 46 an einen Addierer 47, der die Speicherwerte summiert und als Kennwert 33 bereitstellt.

Figur 4a zeigt einen ersten Signalverlauf 48 in Abhängigkeit von der Zeit t, der dem ersten Schaltsignal 13 entspricht. Der erste Signalverlauf 48 weist einen ersten Zustand 49 und einen zweiten Zustand 50 auf. Der Signalzustand 49, 50 kann sich zu vorgegebenen Zeitpunkten T1 - T8 ändern. Eingetragen ist ein Signalpegel des ersten Signalverlaufs 48 von Null oder 1.

Figur 4b zeigt einen zweiten Signalverlauf 51 in Abhängigkeit von der Zeit t, der dem zweiten-Schaltsignal 14 entspricht. Der zweite Signalverlauf 51 weist ebenfalls einen ersten Schaltzustand 52 und einen zweiten Schaltzustand 53 auf. Gezeigt ist ein Signalgegel des zweiten Signalverlaufs 51, der entweder Null oder 2 beträgt.

Figur 4c zeigt den Verlauf des Kennwerts 33 in Abhängigkeit von der Zeit t. Der Pegel des Kennwerts 33 liegt zwischen dem Betrag Null und dem Betrag 4. In Figur 4c ist der Schwellenwert 35 eingetragen, der den Betrag 4 aufweist. Weiterhin sind eingetragen der obere Grenzwert 31, der einen Betrag von 5 aufweisen soll und der untere Grenzwert 32, der den Betrag Null aufweisen soll.

Eine Pegeländerung des Kennwerts 33 kann zu den vorgegebenen Zeitpunkten T1 - T8 auftreten.

Figur 5a zeigt eine erste Zeitdauer 54. Eingetragen ist ein Startzeitpunkt TS und ein erster Endzeitpunkt TE1.

Figur 5b zeigt eine zweite Zeitdauer 55. Eingetragen ist wieder der Startzeitpunkt TS. Die zweite Zeitdauer 55 zeigt weist ein Zeitfenster 56 auf, das zum Anfangszeitpunkt TA beginnt und zum Endzeitpunkt TE2 endet. Die Dauer des Zeitfensters 56 ist mit TMax bezeichnet.

Die erfindungsgemäße Schaltungsanordnung arbeitet folgendermaßen:

Das Sensorelement 10 ist ein Luftgütesensor, der wenigstens eine Gaskomponente der Atemluft erfaßt. Das Sensorelement 10 kann beispielsweise ein Metalloxydsensor sein. Bevorzugt erfaßte Gaskomponenten sind beispielsweise CO und NOx.

Anstelle eines Sensorelements 10 können weitere Sensorelemente vorgesehen sein, die unterschiedliche Gaskomponenten detektieren. Mit einem hier nicht näher erläuterten Betriebsverfahren des einen Sensorelements 10 kann es auch möglich sein, mehrere Gaskomponenten aus einem einzigen Sensorsignal 11 zu ermitteln. Das Sensorsignal 11 wird in der Signalbewertung 12 anhand von wenigstens einem Kriterium 15, 16 bewertet. Das erste Kriterium 15 kann beispielsweise eine vorgegebene absolute Grenze für eine bestimmte Gasart sein. Das zweite Kriterium 16 kann beispielsweise eine vorgegebene Änderung pro Zeiteinheit einer bestimmten Gaskomponente sein. Anstelle der in Figur 1 gezeigten zwei Kriterien 15, 16 können weitere Kriterien in der Kriterienvorgabe 17 vorhanden sein, auf die das Sensorsignal 11 untersucht wird.

In Abhängigkeit vom Ergebnis gibt die Signalbewertung 12 wenigstens ein Schaltsignal 13, 14 aus. Im gezeigten Ausführungsbeispiel sind das erste und das zweite Schaltsignal 13, 14 eingetragen. Gegebenenfalls können weitere Schaltsignale bereitgestellt werden.

Die Schaltsignale 13, 14 gelangen nach Durchlaufen der Schaltsignalweitergabe 18 als externe Schaltsignale 20, 21 zur Klimaanlage 22. Die Schaltsignalweitergabe 18 kann eine logische Verknüpfung des ersten und zweiten Schaltsignals 13, 14 vorsehen, so dass die externen Schaltsignale 20, 21 nicht identisch sind mit den Schaltsignalen 13, 14. Die beiden Schaltsignale 13, 14 einerseits sowie die beiden externen Schaltsignale 20, 21 andererseits sind in Figur 1 mit getrennten Signalpfaden eingetragen. In einer praktischen Realisierung können mehrere Schaltsignale 13, 14 und mehrere externen Schaltsignale 20, 21 über einen einzigen Datenkanal übertragen werden.

Die beiden externen Schaltsignale 20, 21 können in der Klimaanlage 22 zur Steuerung der Komponenten 23, 24, 25 der Klimaanlage 22 herangezogen werden. Aufgrund der externen Schaltsignale 20, 21 kann die Klimaanlage 22 eine Betätigung der Umluftklappe 23, das Betreiben des Ventilators 24 oder das Inbetriebnehmen der Luftreinigung 25 veranlassen. Die Luftreinigung 25 ist beispielsweise als Aktivkohlefilter aufgebaut. An Stelle der gezeigten Komponenten 23, 24, 25 können andere oder weitere Komponenten die Klimaanlage 22 insgesamt bilden. In einer praktischen Realisierung wird die Klimaanlage 22 weitere nicht näher gezeigte Eingangssignale, beispielsweise ein von einem Temperaturfühler oder ein von einem Feuchtigkeitsfühler bereitgestelltes Signal berücksichtigen. Die Klimaanlage 22 kann beispielsweise in einem Kraftfahrzeug angeordnet sein.

Beispiele des zeitlichen Verlauf-s der Schaltsignale 13, 14 sind in den Figuren 4a und 4b gezeigt. Der erste Signalverlauf 48 soll dem ersten Schaltsignal 13 und der zweite Signalverlauf 51 soll dem zweiten Schaltsignal 14 entsprechen. Die Signalverläufe 48, 51 verdeutlichen, dass vorzugsweise eine zeitdiskrete Signalverarbeitung vorgesehen ist, die sich besonders eignet zur Realisierung in einem Mikrocomputer. Signaländerungen erfolgen zu den diskreten Zeitpunkten T1 - T8. Die Zeitdifferenz zwischen den Zeitpunkten T1 - T8 beträgt beispielsweise 30 sec. Die Schaltsignale 13, 14 sind digitale Signale, die jeweils einen ersten Zustand 49, 52 und einen zweiten Zustand 50, 53 aufweisen können. Die in den Figuren 4a und 4b gezeigten zwei Signalverläufe 48, 51 sind bereits mit einer Gewichtung eingetragen, die in der Gewichtung 19 erfolgt. Die Gewichtung ist beispielsweise derart vorgesehen, dass dem ersten Schaltzustand ein Betrag von Null und dem zweiten Schaltzustand 50 ein Betrag von 1 zugewiesen ist. Dem zweiten Schaltzustand 50 ist bei Vorliegen des ersten Schaltzustandes 52 der Betrag Null und bei Vorliegen des zweiten Schaltzustandes 53 der Betrag 2 zugewiesen.

Die Gewichtung 19 ermittelt aus den Schaltsignalen 13, 14 aufgrund der gegebenenfalls unterschiedlichen Gewichtung das Eingangssignal 26 für den Integrator 27.

Eine erste Realisierungsmöglichkeit sowohl der Gewichtung 19 als auch des Integrators 27 sieht gemäss Figur 2 die Zählersteuerung 38, das Vorwärtszählsignal 39, das Rückwärtszählsignal 40, den Zähler 41 und den Taktgenerator 42 vor. Die Zählersteuerung 38 gibt beispielsweise bei Vorliegen des zweiten Schaltzustands 50 des ersten Schaltsignals 13 ein Vorwärtszählsignal 39 an den Zähler 41 weiter, dessen Zählerstand sich dadurch um den Betrag 1 erhöht. Der Zählerstand entspricht dem Kennwert 33. Bei Vorliegen des zweiten Schaltzustands 53 des zweiten Schaltsignals 14 gibt die Zählersteuerung 38 aufgrund der unterschiedlichen Gewichtung, die im gezeigten Ausführungsbeispiel den Betrag 2 aufweisen soll, zum Zeitpunkt t₄ zwei Vorwärtszählsignale 39 an den Zähler 41 ab, so dass sich der Kennwert 33 gleich um 2 erhöht. Bei Vorliegen des ersten Schaltzustands 49, 52 sowohl des ersten als auch des zweiten Schaltsignals 13, 14 gibt die Zählersteuerung 38 ein Rückwärtszählsignal 40 an den Zähler 41 weiter, so dass sich der Kennwert 33 in beiden Fällen um den Betrag 1 vermindert. Zur Steuerung der Zählersteuerung 38 und insgesamt zur Takterzeugung ist der Taktgenerator 42 vorgesehen, der beispielsweise zu den Zeitpunkten T1 - T8 Schaltflanken erzeugt, die zu den vorgegebenen Zeitpunkten T1 - T8 aktive Schaltflanken sind.

Der Zähler 41 kann durch die Startwertvorgabe 28 mit dem Startwert 29 auf einen vorgegebenen Zählerstand gebracht werden. Weiterhin kann der Zähler mit der von der Grenzwertvorgabe 30 auf einen oberen Grenzwert 31 und/oder unteren Grenzwert 32 eingestellt werden. Ein Überschreiten der oberen/unteren Grenze des Kennwerts 32 ist damit nicht mehr möglich. In Figur 4c, die einen möglichen zeitlichen Verlauf des Kennwerts 33 wiedergibt, sind der obere Grenzwert 31 beispielhaft auf den Betrag 5 und der untere Grenzwert 32 auf den Betrag Null festgelegt. Zum Zeitpunkt T1 weisen der erste und zweite Signalverlauf 48, 51 jeweils den Pegel Null auf. Die Zählersteuerung 38 wird zum Zeitpunkt T1, bei dem sowohl der erste als auch der zweite Signalverlauf 48, 51 jeweils den Pegel Null aufweisen, ein Rückwärtszählsignal 40 an den Zähler 48 geben. In Figur 4c ist der Fall eingetragen, dass der Kennwert 33 den Betrag Null aufweist und damit bereits den unteren Grenzwert 33 erreicht hat. Zum Zeitpunkt T2 weist der erste Signalverlauf 48 den zweiten Schaltzustand 58 auf. Aufgrund der Gewichtung des ersten Schaltsignals 13 gibt die Zählersteuerung 38 ein Vorwärtszählsignal 39 an den Zähler 41 ab, so dass der Kennwert 33 auf den Betrag 1 steigt. Nach dem Zeitpunkt T3 weisen der erste und zweite Signalverlauf 48, 41-jeweils den ersten -Schaltzustand 49, 42 auf, so dass die Zählersteuerung 38 ein Rückwärtszählsignal 40 an den Zähler 41 weitergibt, der daraufhin den Kennwert 33 vom Betrag 1 auf den Betrag Null dekrementiert. Zum Zeitpunkt T4 weist sowohl der erste Signalverlauf 48 als auch der zweite Signalverlauf 41 den zweiten Schaltzustand 50, 53 auf. Aufgrund der Gewichtung stellt die Zählersteuerung 38 drei Vorwärtszählsignale 39 zur Verfügung, so dass der Kennwert 33 den Betrag 3 aufweist. Zum Zeitpunkt T5 weisen beide Signalverläufe 48, 51 wieder den ersten Schaltzustand 49, 52 auf, der die Zählersteuerung 38 zum Abgeben eines Rückwärtszählsignals 40 veranlaßt. Zu den beiden Zeitpunkten T6 und T7 liegt beim ersten Signalverlauf 48 jeweils der zweite Schaltzustand 50 vor, mit der Folge, dass die Zählersteuerung 38 sowohl zum Zeitpunkt T6 als auch zum Zeitpunkt T7 jeweils ein Vorwärtszählsignal 39 abgibt.

Durch die Bereitstellung von Vorwärts- und Rückwärtszählsignalen 39, 40 und gleichzeitig der Vorgabe des oberen und/oder des unteren Grenzwerts 31, 32 ist durch den gleitenden Integrationsprozesse, realisiert durch die Additionsund Substraktionsvorgänge im Zähler 41, sichergestellt, dass weiter in der Vergangenheit liegende Schaltzustände 49, 50, 52, 53 der Schaltsignale 13, 14 gewissermaßen vergessen werden. Gegebenenfalls kann eine Zeitauer 54, 55 vorgesehen sein, der in den Figuren 5a und 5b gezeigt ist. Die erfindungsgemäße Schaltungsanordnung wird zum Startzeitpunkt TS in Betrieb genommen. Der Integrationsvorgang beginnt zu diesem Zeitpunkt, wobei der Zähler 41 gegebenenfalls auf den von der Startwertvorgabe 28 bereitgestellten Startwert 29 für den Kennwert 33 gesetzt wird. Ein Abschalten der erfindungsgemäßen Schaltungsanordnung ist zum ersten Endzeitpunkt TE1 vorgesehen, der beispielsweise 15 min nach dem Startzeitpunkt TS liegt. Innerhalb des zwischen dem ersten Endzeitpunkt TE1 und dem Startzeitpunkt TS liegenden Zeitintervalls findet die Integration im Zähler 41 ohne weitere Eingriffe statt. Die zweite Zeitdauer 55 soll vorgegeben seinbei einem längeren Betrieb der erfindungsgemäßen Schaltungsanordnung. Die Inbetriebnahme erfolgt wieder zum Startzeitpunkt TS. Die Abschaltung erfolgt zum-zweiten Endzeitpunkt TE2. Der zweite Endzeitpunkt TE2 liegt beispielsweise 45 min nach dem Startzeitpunkt TS.

Gemäss einer vorteilhaften Weiterbildung kann die Vorgabe des Zeitfensters 56 vorgesehen sein, das die Dauer Tmax aufweist und beispielsweise auf 30 min festgelegt ist. Der Anfangszeitpunkt TA des Zeitfensters 56 liegt dann 30 min in der Vergangenheit, bezogen auf den aktuellen Zeitpunkt. Wird die erfindungsgemäße Schaltungsanordnung nicht abgeschaltet, schreitet das Zeitfenster 56 mit voranschreitender Betriebszeit ebenfalls weiter. Einfluß auf den Integrationsvorgang kann mit dem Zeitfenster 56 dadurch genommen werden, dass die in dem Zähler 41 vor dem Anfangszeitpunkt TA des Zeitfensters 56 angegebenen Zählsignale rückgängig gemacht werden. Aufgrund der als geeignet festgelegten Erzeugung von Vorwärts- und Rückwärtszählsignalen 39, 40 kann in der Praxis auf die Vorgabe des Zeitfensters 56 aber verzichtet werden.

Bei der in Figur 3 gezeigten alternativen Realisierung der Gewichtung 19 und des Integrators 27 ist die Vorgabe des Zeitfensters 56 durch die Festlegung der vorhandenen Speicherplätze im Speicher 45 und durch die Festlegung des vom Taktgenerator 42 bereitgestellten Taktsignals ohne Zusatzaufwand verwirklicht. Die Realisierung mit dem Speicher 46 eignet sich insbesondere zur Implementierung in einem Mikrocomputer. Die Schaltsignale 13, 14 gelangen in die Speicherwertfestlegung 43, die der Gewichtung 19 entspricht. Den Schaltzuständen 49, 50, 52, 53 der Schaltsignale 13, 14 werden in Abhängigkeit von der Gewichtung unterschiedliche Beträge zugeordnet, die als Speicherwerte 44 im Speicher 45 hinterlegt werden. Der Speicher 45 weist eine vorgegebene Anzahl von Speicherplätzen für die Speicherwerte 44 auf. Zur zeitlichen Steuerung ist wieder der Taktgenerator 42 vorgesehen, der beispielsweise nach 30 sec einen Speicherbefehl erzeugt. Die Anzahl der Speicherplätze hängt vom vorgegebenen Zeitfenster 56 ab. Bei einem Takt von 30 sec und einer Zeitdauer TMax des Zeitfensters 56 von 30 min muss der Speicher 45 sechzig Speicherstellen aufweisen.

Bei der in Figur 5a gezeigten ersten Zeitdauer 54, bei dem der erste Endzeitpunkt TE1 vor dem Erreichen der Zeitdauer TMax von beispielsweise 30 min liegt, wird eine geringere Anzahl von Speicherwerten 44 eingespeichert als Speicherplätze vorhanden sind. Für diesen Betriebszustand kommt dem Startwert 29, der die Speicherzellen im Speicher 45 auf vorgegebene Werte setzt, eine Bedeutung bei, die entfällt, wenn das Zeitfenster 56 zu greifen beginnt, bei dem sämtliche Speicherstellen des Speichers 45 mit den von der Speicherwertfestlegung 43 bereitgestellten Speicherwerten 44 belegt sind.

Zum Erreichen einer Integration ist eine Addition der hinterlegten Speicherwerte 44 im Addierer 47 vorzunehmen, dem bei diesem Ausführungsbeispiel der obere und/oder der untere Grenzwert 31, 32 zugeführt wird. Als Ergebnis des Addierers steht der Kennwert 33 zur Verfügung, der dem Vergleicher 34 zur Verfügung gestellt wird.

Der Vergleicher 34 vergleicht den Kennwert 33 mit dem Schwellenwert 35, der im gezeigten Ausführungsbeispiel gemäss Figur 4c auf einen Betrag von beispielsweise 4 festgelegt ist. Erreicht der Kennwert 33 diesen Wert, dann stellt der Vergleicher 34 die Korrektursignale 36, 37 zur Verfügung. Das erste Korrektursignal 36 greift in die Kriterienvorgabe 17 ein. Durch eine Veränderung der vorgegebenen Kriterien zur Bewertung des Sensorsignals 11 in der Signalbewertung 12 ist eine Beeinflussung der Schaltsignale 13, 14 möglich durch eine Veränderung beispielsweise einer vorgegebenen absoluten Schwelle anhand des ersten Kriteriums 15 und/oder durch eine Veränderung der zeitlichen Bewertung einer Signaländerung durch das zweite Kriterium 16.

Das zweite Korrektursignal 37 greift in die Schaltsignalweitergabe 18 ein. Neben einer Änderung der logischen Kombination der Schaltsignale 13, 14 zu den externen Schaltsignalen 20, 21 kann beispielsweise auch nur eine Unterdrückung wenigstens eines externen Schaltsignals 20, 21 vorgesehen sein.

Die Korrektursignale 36, 37 ermöglichen es, beispielsweise die Betätigungshäufigkeit der Umluftklappe 23 der Klimaanlage 22 zu reduzieren und ein Flattern zu verhindern. Gleiches gilt für die Betätigung der Luftreinigung 35.

Eine weitere Reduzierung von Schalthäufigkeiten wird dadurch erzielt, dass der vorgegebene Schwellenwert 35 mit einer Hysterese versehen wird. Die Hysterese verschiebt den Schwellenwert 35 um einen vorgegebenen Betrag, so dass ein ständiger Eingriff durch die Korrektursignale 36, 37 beim Erreichen des Schwellenwerts 35 durch den Kennwert 33 verhindert wird.

## Patentansprüche

1. Schaltungsanordnung zum Bewerten eines von wenigstens einem Luftgütesensorelements (10) bereitgestellten Sensorsignals (11), mit einer Signalbewertung (12), die das Sensorsignal (11) anhand von wenigstens einem Kriterium (15, 16) bewertet, die wenigstens ein Schaltsignal (13, 14) abgibt, das einen ersten Signalzustand (49, 52) aufweist, der einer hohen Luftgüte entspricht und das einen zweiten Signalzustand (50, 53) aufweist, der einer niedrigen Luftgüte entspricht, **dadurch gekennzeichnet, daß** die Schaltungsanordnung einen Integrator (27) umfasst, der bei Vorliegen des zweiten Signalzustands (50, 53) des Schaltsignals (13, 14) einen Kennwert (33) erhöht und der bei Vorliegen des ersten Signalzustandes (49, 52) den Kennwert (33) absenkt, mit einem Vergleicher (34), der die Kenngröße (33) mit einem Schwellenwert (35) vergleicht und der wenigstens ein Korrektursignal (36, 37) bereitstellt.

2. Schaltungsanordnung nach Anspruch 1, **dadurch gekennzeichnet, dass** die Integration im Integrator (27) zeitdiskret durchgeführt wird.

3. Schaltungsanordnung nach einem der vorhergehenden Ansprüche, **dadurch gekennzeichnet, dass** wenigstens zwei Schaltsignale (13, 14) vorgesehen sind, die unterschiedlich gewichtet integriert werden.

4. Schaltungsanordnung nach einem der vorhergehenden Ansprüche, **dadurch gekennzeichnet, dass** eine Startwertvorgabe (28) zur Vorgabe eines Startwerts (29) für den Kennwert (33) vorgesehen ist.

5. Schaltungsanordnung nach einem der vorhergehenden Ansprüche, **dadurch gekennzeichnet, dass** ein oberer und/oder unterer Grenzwert (31, 32) für den Kennwert (33) vorgesehen ist.

6. Schaltungsanordnung nach einem der vorhergehenden Ansprüche, **dadurch gekennzeichnet, dass** die Integration im Integrator (27) begrenzt ist auf ein Zeitfenster (56) mit einer vorgegebenen Zeitdauer (TMax).

7. Schaltungsanordnung nach einem der vorhergehenden Ansprüche, **dadurch gekennzeichnet, dass** der Integrator (27) ein Zähler (41) ist und dass eine Zählersteuerung (38) vorgesehen ist, die den einen Signalzustand (50, 53) des Schaltsignals (13, 14) in ein Vorwärts- und den anderen Signalzustand (49, 52) des Schaltsignals (19, 14) in ein Rückwärtszählsignal (39, 40) umsetzt.

8. Schaltungsanordnung nach Anspruch 3 und 7, **dadurch gekennzeichnet, dass** die Gewichtung der Schaltsignale (13, 14) berücksichtigt ist durch die Anzahl der Zählvorgänge zu einem vorgegebenen Zeitpunkt (T1 - T8).

9. Schaltungsanordnung nach einem der Ansprüche 1 bis 6, **dadurch gekennzeichnet, dass** der Integrator (27) als ein Speicher (45) und ein Addierer (47) zum Summieren der Speicherwerte (44) des Speichers (45) realisiert ist.

10. Schaltungsanordnung nach Anspruch 3 und 9, **dadurch gekennzeichnet, dass** die Gewichtung der Schaltsignale (13, 14) berücksichtigt ist durch Vorgabe des Betrags der Speicherwerte (44) in einer Speicherwertfestlegung (43).

11. Schaltungsanordnung nach einem der vorhergehenden Ansprüche, **dadurch gekennzeichnet, dass** das Korrektursignal (36, 37) wenigstens ein an die Klimaanlage (22) weitergeleitetes externes Schaltsignale (20, 21) in einer Schaltsignalweitergabe (18) beeinflußt.

12. Schaltungsanordnung nach einem der vorhergehenden Ansprüche, **dadurch gekennzeichnet, dass** das Korrektursignal (36, 37) wenigstens ein Kriterium (15, 16) in einer Kriterienvorgabe (17) beeinflußt.

## Claims

1. A circuit arrangement for evaluating a sensor signal (11) provided by at least one air quality sensor element (10), comprising a signal evaluation unit (12) which evaluates the sensor signal (11) with reference to at least one criterion (15, 16), which delivers at least one switching signal (13, 14) which has a first switching state (49, 52) corresponding to a high air quality and which has a second signal state (50, 53) corresponding to a low air quality, **characterised in that** the circuit arrangement comprises an integrator (27) which increases a characteristic value (33) in the presence of the second signal state (50, 53) of the switching signal (13, 14) and which lowers the characteristic value (33) in the presence of the first signal state (49, 52), comprising a comparator (34) which compares the characteristic value (33) with a threshold value (35) and which provides at least one correction signal (36, 37).

2. The circuit arrangement according to claim 1, **characterised in that** the integration is performed in a temporally discrete manner in the integrator (27).

3. The circuit arrangement according to any one of the preceding claims, **characterised in that** at least two switching signals (13, 14) are provided which are integrated with different weightings.

4. The circuit arrangement according to any one of the preceding claims, **characterised in that** a default starting value (28) is provided for predefining a starting value (29) for the characteristic value (33).

5. The circuit arrangement according to any one of the preceding claims, **characterised in that** an upper and/or a lower limiting value (31, 32) is provided for the characteristic value (33).

6. The circuit arrangement according to any one of the preceding claims, **characterised in that** the integration in the integrator (27) is limited to a time window (56) with a predefined duration (TMax).

7. The circuit arrangement according to any one of the preceding claims, **characterised in that** the integrator (27) is a counter (41) and that there is provided a counter controller (38) which converts one signal state (50, 53) of the switching signal (13, 14) into a forward counting signal and the other signal state (49, 52) of the switching signal (19, 14) into a backward counting signal (39, 40).

8. The circuit arrangement according to claim 3 and 7, **characterised in that** the weighting of the switching signals (13, 14) is taken into account by the number of counting processes at a predefined time (T1 - T8).

9. The circuit arrangement according to any one of claims 1 to 6, **characterised in that** the integrator (27) is implemented as a memory (45) and an adder (47) for summing the memory values (44) of the memory (45).

10. The circuit arrangement according to claim 3 and 9, **characterised in that** the weighting of the switching signals (13, 14) is taken into account by predefining the magnitude of the memory value (44) in a memory value determining unit (43).

11. The circuit arrangement according to any one of the preceding claims, **characterised in that** the correction signal (36, 37) influences at least one external signal (20, 21) transferred to the air-conditioning system (22) in a switching signal transfer unit (18).

12. The circuit arrangement according to any one of the preceding claims, **characterised in that** the correction signal (36, 37) influences at least one criterion (15, 16) in a criterion default (17).

## Revendications

1. Montage électrique pour évaluer un signal de détecteur (11) émis par au moins un détecteur de qualité de l'air (10), avec une évaluation de signal (12) pour évaluer le signal de détecteur (11) à partir d'un critère (15, 16) au moins, qui produit au moins un signal de commutation (13, 14), présentant un premier état de commutation (49, 52) correspondant à une qualité élevée de l'air, ainsi qu'un deuxième état de commutation (50, 53) correspondant à une faible qualité de l'air, **caractérisé en ce que** le montage électrique comprend un intégrateur (27) qui fait augmenter un paramètre (33) sous l'effet du deuxième état de commutation (50, 53) du signal de commutation (13, 14) et qui fait diminuer le paramètre (33) sous l'effet du premier état de commutation (49, 52), avec un comparateur (34) qui compare la valeur du paramètre (33) avec une valeur limite (35) et qui fournit au moins un signal de correction (36, 37).

2. Montage électrique selon la revendication 1, **caractérisé en ce que** l'intégration est réalisée à temps discret dans l'intégrateur (27).

3. Montage électrique selon l'une des précédentes revendications, **caractérisé en ce qu'**il existe au moins deux signaux de commutation (13, 14) qui sont intégrés avec des pondérations différentes.

4. Montage électrique selon l'une des précédentes revendications, **caractérisé en ce qu'**il existe une programmation de la valeur de départ (28) servant à définir la valeur de départ (29) du paramètre (33).

5. Montage électrique selon l'une des précédentes revendications, **caractérisé en ce qu'**il existe une valeur limite supérieure et/ou une valeur limite inférieure (31, 32) pour le paramètre (33).

6. Montage électrique selon l'une des précédentes revendications, **caractérisé en ce que** l'intégration dans l'intégrateur (27) est limitée à un intervalle de temps (56) d'une durée prescrite (Tmax).

7. Montage électrique selon l'une des précédentes revendications, **caractérisé en ce que** l'intégrateur (27) est un compteur (41) et **en ce qu'**il existe une commande de compteur (38), permettant de transformer l'un des états de signal (50, 53) du signal de commutation (13, 14) en un signal de marche avant et l'autre état de signal (49, 52) du signal de commutation (19, 14) en un signal de marche arrière (39, 40).

8. Montage électrique selon les revendications 3 et 7, **caractérisé en ce que** la pondération du signal de commutation (13, 14) est prise en compte grâce au nombre du processus de comptage à un moment donné (T1 - T8).

9. Montage électrique selon l'une des revendications 1 à 6, **caractérisé en ce que** l'intégrateur (27) est conçu comme une mémoire (45) et comme un additionneur (47) pour additionner les valeurs enregistrées (44) dans la mémoire (45).

10. Montage électrique selon les revendications 3 et 9, **caractérisé en ce que** la pondération des signaux de commutation (13, 14) est prise en compte dans la détermination (43) des valeurs enregistrées, grâce à la programmation des valeurs enregistrées (44).

11. Montage électrique selon l'une des précédentes revendications, **caractérisé en ce que** le signal de correction (36, 37) influence au moins un signal de commutation externe (20, 21) transmis vers l'installation de climatisation (22) lors d'une transmission (18) de signaux de commutation.

12. Montage électrique selon l'une des précédentes revendications, **caractérisé en ce que** le signal de correction (36, 37) influence au moins un critère (15, 16) dans une programmation de critères (17).
